# EUROPÄISCHE PATENTSCHRIFT

(11) **EP 3 098 154 B1**
(45) Veröffentlichungstag und Bekanntmachung des Hinweises auf die Patenterteilung: **09.10.2019**
(21) Anmeldenummer: 16171284.9
(22) Anmeldetag: 25.05.2016
(51) Int. Cl.: B62K 27/00, B62B 7/12, B62K 25/02, B62B 7/04

(54) **VORDERRADGABEL**
FRONT WHEEL FORK
FOURCHE AVANT

(30) Priorität: 28.05.2015 DE 102015108474
(43) Veröffentlichungstag der Anmeldung: 30.11.2016
(73) Patentinhaber: Croozer GmbH, 50825 Köln (DE)
(72) Erfinder: Weber, Herbert, 83254 Breitbrunn (DE); Gehlen, Andreas, 50829 Köln (DE)
(74) Vertreter: Lenzing Gerber Stute

(56) Entgegenhaltungen:
- WO-A1-2010/139507
- DE-A1- 19 638 097
- GB-A- 2 451 687
- US-A- 3 694 004
- US-B1- 7 090 231

## Beschreibung

Die vorliegende Erfindung betrifft eine Vorderradgabel für einen Multifunktions-Fahrradanhänger mit zwei Gabelarmen, an deren in Fahrtrichtung vorderen Enden jeweils ein Gabelausfall zur Aufnahme einer Radachse eines Rades ausgebildet ist. Multifunktions-Fahrradanhänger, insbesondere solche zum Transport von Kindern, erfreuen sich aufgrund ihrer vielseitigen Einsatzmöglichkeiten immer größerer Beliebtheit. Sie können zum Beispiel zu einem sogenannten Jogger oder Walker umgebaut werden, indem ihre Deichsel entfernt oder eingeklappt und eine aus zwei voneinander getrennten Gabelarmen bestehende, nach vorn auskragende Vorderradgabel am Fahrzeugchassis des Fahrradanhängers montiert wird.

Bei den nach vorn auskragenden Gabelarmen von bekannten Multifunktions-Fahrradanhängern in ihrer Funktion als sogenannter "Jogger" bzw. "Walker" kann das Problem bestehen, dass die Spur des Vorderrads nicht exakt parallel zur Längsachse des Fahrradanhängers, sondern leicht schräg dazu verläuft. Da die beiden Gabelarme üblicherweise getrennt voneinander am Chassis des Fahrradanhängers montiert werden, kann die Lage der Gabelarme zueinander nach Demontage und erneuter Montage regelmäßig variieren. Dadurch muss die Spur des Vorderrades immer wieder neu justiert werden muss, indem das üblicherweise mit einer Schnellspannachse ausgestattete Vorderrad möglichst gerade in die in Fahrtrichtung nach vorn offenen Aufnahmen der Gabel für die Radachse, den Gabelausfall, eingesetzt wird. Wenn dies nicht ausreichend genau gelingt, muss der den Fahrradanhänger schiebende Benutzer die Fahrtrichtung im schlimmsten Fall regelmäßig korrigieren. Dokument US7090231 B1 offenbart eine Vorderradgabel mit einer Vorrichtung zum Verstellen einer Radachse eines Rades in Fahrtrichtung.

Eine Aufgabe der vorliegenden Erfindung besteht darin, eine Vorderradgabel der eingangs genannten Art zur Verfügung zu stellen, die einen verbesserten Geradeauslauf ermöglicht.

Diese Aufgabe wird bei einer Vorderradgabel gemäß Anspruch 1 gelöst durch mindestens eine Vorrichtung zum Verstellen der Radachse in Fahrtrichtung, wobei die Radachse vorzugsweise stufenlos verstellbar ist.

Unter einem Verstellen der Radachse in Fahrtrichtung wird hier und im Folgenden wahlweise das Verändern der Position des Gabelausfalls mit einer Richtungskomponente in Fahrtrichtung gegenüber dem Chassis des Fahrradanhängers als auch das Verschieben der Radachse im Gabelausfall mit einer Richtungskomponente in Fahrtrichtung verstanden.

Ist mindestens ein Gabelausfall der beiden Gabelarme in Fahrtrichtung verstellbar, kann die Spur des Vorderrades exakt eingestellt und somit die zugrunde liegende Aufgabe auf überraschend einfache Weise gelöst werden.

Gemäß einer Ausführungsform der Erfindung sind an der Vorderseite eines Gabelarms ein Gabelarmendstück, das insbesondere rohrförmig oder zylindrisch ausgestaltet sein kann, und ein Gabelausfallelement, in oder an dem der Gabelausfall ausgebildet ist, vorgesehen, wobei das Gabelausfallelement als Vorrichtung zum Verstellen des Gabelausfalls am oder im Gabelarmendstück axial verschiebbar gelagert ist. Diese Ausführungsform hat den besonderen Vorteil, dass die Radachse nicht innerhalb des Gabelausfalls positioniert werden muss, sondern erst in den Gabelausfall eingesetzt und befestigt werden kann, bevor der Gabelausfall in seiner Position relativ zum Gabelarmendstück verstellt wird.

Bei dieser erfindungsgemäßen Ausführungsform ist an einem von Gabelausfallelement oder Gabelarmendstück mindestens ein quer zum Gabelarmendstück angeordneter Führungsstift gelagert und an dem anderen von Gabelausfallelement und Gabelarmendstück mindestens eine Führung für den Führungsstift vorgesehen, die eine axial zum Gabelarmendstück verlaufende Richtungskomponente aufweist. Über den in der Führung geführten Führungsstift ist dann die Position des Gabelausfallelements im Gabelarmendstück einstellbar.

In einer erfindungsgemäßen Ausführungsform ist der Führungsstift drehbar gelagert, und die Führung beschreibt einen wendelförmigen Abschnitt. Je kleiner die Steigung des wendelförmigen Abschnitts in axialer Richtung ist, desto einfacher und exakter lässt sich die Spur des Rades einstellen.

In einer weiteren bevorzugten Ausführungsform ist der Führungsstift fest mit einem das Gabelarmendstück und einen Teil des Gabelausfalls zumindest teilweise umgreifenden Mantelstück verbunden, wobei das Mantelstück je nach Ausführungsform in axialer oder in Umfangsrichtung beweglich geführt sein kann. Ein Mantelstück ist zum Einstellen der Spur des Rades besser handhabbar als ein einfacher Stift.

Vorzugsweise ist das Mantelstück in einem die Gehäusewandung des Gabelausfalls eingelassenen Lagerbett geführt und damit in Bezug zur Gehäusewandung des Gabelausfalls ortsfest.

Außerdem kann ein Mantelstück entsprechend einer weiteren bevorzugten Ausgestaltung der Erfindung mit einem Rastmechanismus ausgestattet sein, mit dem es in einer bestimmten Position feststellbar ist. Ein Rastmechanismus könnte beispielsweise derart ausgestaltet sein, dass ein axial verschiebbares Mantelstück durch eine Drehung um seine Längsachse in eine verrastete Position gebracht und durch eine Drehung in entgegengesetzte Richtung wieder frei wird. Dementsprechend könnte der Rastmechanismus auch so ausgestaltet sein, dass ein drehbar geführtes Mantelstück durch ein kurzes Verschieben in axialer verrastet und bei Verschieben in entgegengesetzter Richtung wieder frei wird. Natürlich ist ein Rastmechanismus für ein Mantelstück nicht zwingend notwendig. Es ist ebenso denkbar, aber weniger komfortabel, einen aus der Radgabel herausstehenden Führungsstift gegen ein Verschieben durch eine um den Gabelausfall herumgeführte Schelle in einer bestimmten Position festzuklemmen.

Alternativ können Gabelausfall und Gabelarmendstück über einen Reibschluss derart fest miteinander verbunden sein, dass der Gabelausfall seine Position relativ zum Gabelarmendstück selbst unter Einwirkung von bei Fahrt wirkenden Kräften beibehält. Ein aktives Feststellen durch hierfür geeignete Mittel kann dann entfallen.

Im Folgenden wird die Erfindung anhand von Figuren, in denen bevorzugte Ausführungsbeispiele der Erfindung dargestellt sind, näher erläutert.

Es zeigen
- Fig. 1: eine perspektivische Ansicht einer erfindungsgemäßen Radgabel als Vorderradgabel für einen Multifunktions-Fahrradanhänger mit Joggerfunktion zusammen mit einem darin eingesetzten Vorderrad;
- Fig. 2: eine perspektivische Ansicht eines Achshalters als Gabelausfallelement der erfindungsgemäßen Radgabel zusammen mit einem angebundenen Gabelarmendstück;
- Fig. 3: den in Figur 2 dargestellten Achshalter in Seitenansicht ohne das darin dargestellte Mantelstück;
- Fig. 4: den in Figur 3 dargestellten Achshalter in Seitenansicht eine in der Ansicht vordere Gehäusehälfte; und
- Fig. 5: die Darstellung der Fig. 4 ohne Gabelarmendstück.

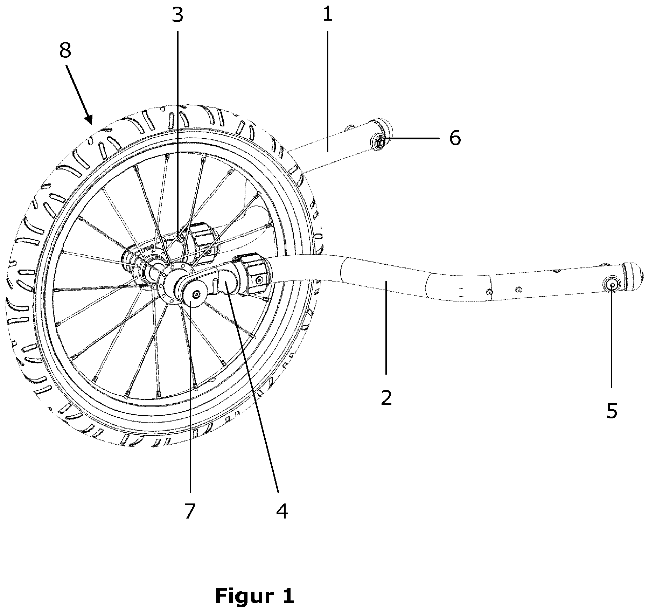

In Figur 1 ist eine erfindungsgemäße Radgabel für die Jogger- bzw. Walkerfunktion eines Multifunktions-Fahrradanhängers dargestellt. Sie weist einen rechten Gabelarm 1 und einen linken Gabelarm 2 auf. An den vorderen Enden der Gabelarme 1, 2 sind Achshalter 3, 4 vorgesehen, die jeweils die Funktion eines Gabelausfalls haben. An den hinteren Enden weisen die Gabelarme seitliche Stifte 5, 6 auf, die der Befestigung der Gabelarme 3, 4 in hierfür vorgesehene Führungen an einem Chassis eines hier nicht dargestellten Fahrradanhängers dienen. Die Achshalter halten die Radachse 7 eines Vorderrades 8 des Fahrradanhängers mit Joggerfunktion.

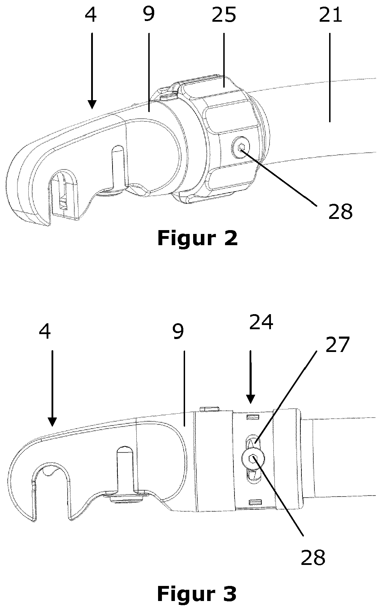

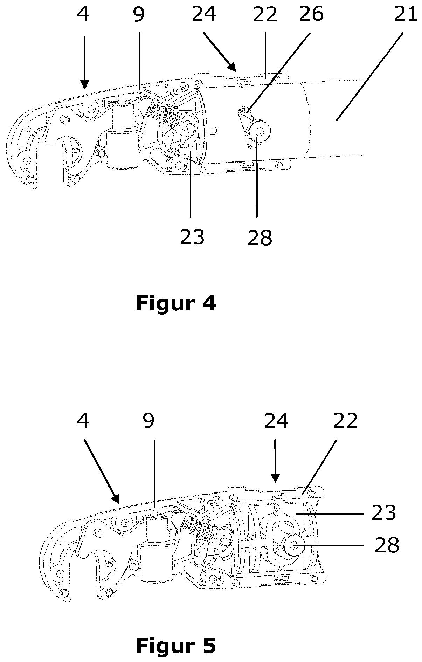

Anhand der Figuren 2 bis 5 wird die Verbindung zwischen dem Gabelarmendstück 21 des Gabelrohrs 2 und dem Achshalter (4 der in Figur 1 dargestellten Radgabel näher erläutert. Das Gabelarmendstück 21 sitzt in einem offenen Ende 22 des Gehäuses 9 des Achshalters 4, wobei die Gehäusewand das Gabelarmendstück 21 vollständig umschließt. Innerhalb des Gabelarmendstücks sitzt ein Kunststoffkörper 23 zur Stabilisierung des Gabelarmendstücks 22 gegen die vom Achshalter 4 in das Gabelarmendstück 21 eingeleiteten Kräfte. In die Außenseite der Gehäusewand ist ein umlaufendes Lagerbett 24 für ein umlaufendes Mantelstück 25 eingelassen, das innerhalb des Lagerbettes 24 frei um das Gehäuse herum drehbar ist. Im Gabelarmendstück 21 sind auf gegenüberliegenden Seiten miteinander korrespondierende, wendelartige Führungen 26 mit einer konstanten Steigung in axialer Richtung eingelassen. Außerdem sind im Lagerbett 24 der Gehäusewand auf gegenüberliegenden Abschnitten Führungsdurchbrüche 27 vorgesehen, die allerdings in axialer Richtung keine Steigung aufweisen. Ein Führungsstift 28 ist vorgesehen, dessen Breite der Breite der Führungen 26 und der Führungsdurchbrüche 27 entspricht. Der Führungsstift 28 erstreckt sich durch die Führungsdurchbrüche 27, die Führungen 26 und den Kunststoffkörper 23 hindurch. Seine Enden sind im Mantelstück 25 verschraubt. Wird das Mantelstück 25 um die Gehäusewandung herum im Lagerbett 24 gedreht, läuft der Führungsstift 28 sowohl entlang der Führungen 26 im Gabelarmendstück 22 mit axialer Steigung als auch entlang der Führungsdurchbrüche 27 der Gehäusewandung ohne axiale Steigung. Dadurch wird die Gehäusewandung axial relativ zum Gabelarmendstück verschoben. Im Ergebnis ist es möglich, die Lage des Achshalters 4 in axialer Richtung zu verändern und so die Spur des von der Radgabel gehaltenen Vorderrades 8 zu verstellen. Gleiches kann erreicht werden, wenn die Führungsdurchbrüche im Lagerbett der Gehäusewandung eine axiale Steigung aufweisen und die Führungen im Gabelarmendstück keine, oder wenn die Führungsdurchbrüche im Lagerbett der Gehäusewandung und die Führungen im Rohrendstück eine unterschiedliche axiale Steigung aufweisen. Auch andere Ausführungsformen mit einzelnen, fest an der Gehäusewandung oder dem Gabelarmendstück angeordneten Stiften und hierfür vorgesehenen Führungen mit axialer Komponente in dem jeweils anderen Bauteil sind möglich.

Das Mantelstück 25 weist auf seiner Innenseite einen Abschnitt mit einer elastischen Rippenstruktur auf, die mit einer entsprechenden Rippenstruktur auf der Außenseite der Gehäusewandung zusammenwirkt und einem ungewollten Verdrehen des Mantelstücks 25 entgegenwirkt.

## Patentansprüche

1. Vorderradgabel für einen Multifunktions-Fahrradanhänger mit zwei Gabelarmen (1, 2), an deren in Fahrtrichtung vorderen Enden jeweils ein Gabelausfall (3,4) zur Aufnahme einer Radachse eines Rades (8) ausgebildet ist, mit mindestens einer Vorrichtung zum Verstellen der Radachse mit einer Richtungskomponente in Fahrtrichtung, wobei ein an der Vorderseite eines Gabelarms (1, 2) angeordnetes Gabelarmendstück (21) sowie ein Gabelausfallelement vorgesehen sind, wobei der Gabelausfall (3, 4) in oder an dem Gabelausfallelement ausgebildet ist, wobei das Gabelausfallelement als Vorrichtung zum Verstellen des Gabelausfalls am oder im Gabelarmendstück (21) axial verschiebbar gelagert ist, wobei an einem von Gabelausfallelement oder Gabelarmendstück (21) mindestens ein quer zum Gabelarmendstück (21) angeordneter Führungsstift (28) gelagert ist, und wobei an dem anderen von Gabelausfallelement und Gabelarmendstück (21) mindestens eine Führung (26) für den Führungsstift (28) vorgesehen ist, die eine axial zum Gabelarmendstück (21) verlaufende Richtungskomponente aufweist, **dadurch gekennzeichnet, dass** der Führungsstift (28) drehbar gelagert ist und die Führung (26) einen wendelförmigen Abschnitt beschreibt.

2. Vorderradgabel nach Anspruch 1, **dadurch gekennzeichnet, dass** das Verstellen der Radachse stufenlos erfolgen kann.

3. Vorderradgabel nach Anspruch 1 oder 2, **dadurch gekennzeichnet, dass** der Führungsstift (28) fest mit einem das Gabelarmendstück (21) und/oder das Gabelausfallelement (3, 4) zumindest teilweise umgreifenden Mantelstück (25) verbunden ist.

4. Vorderradgabel nach Anspruch 3, **dadurch gekennzeichnet, dass** das Mantelstück (25) in einem in einer Gehäusewandung des Gabelausfallelements (3, 4) eingelassenen Lagerbett (24) geführt ist.

5. Vorderradgabel nach Anspruch 3 oder 4, **dadurch gekennzeichnet, dass** das Mantelstück (25) über einen Rastmechanismus feststellbar ist.

6. Vorderradgabel für einen Multifunktions-Fahrradanhänger nach Anspruch 1, wobei der Führungsstift (28) fest mit einem das Gabelarmendstück (21) und/oder das Gabelausfallelement zumindest teilweise umgreifenden Mantelstück (25) verbunden ist, wobei das Mantelstück (25) in einem in einer Gehäusewandung des Gabelausfallelements (3, 4) eingelassenen Lagerbett (24) geführt ist.

7. Vorderradgabel nach Anspruch 6, **dadurch gekennzeichnet, dass** das Verstellen der Radachse stufenlos erfolgen kann.

8. Vorderradgabel nach Anspruch 6 oder 7, **dadurch gekennzeichnet, dass** das Mantelstück (25) über einen Rastmechanismus feststellbar ist.

## Claims

1. Front wheel fork for a multifunctional bicycle trailer with two fork arms (1, 2) on the frontends of which, viewed in the direction of travel, a dropout is in each case formed to receive a wheel axle of a wheel (8), with at least one device for adjusting the wheel axle with a directional component in the direction of travel, wherein a fork arm end piece (21) which is arranged on the front end of a fork arm (1, 2) and a dropout element (3, 4), in or on which the dropout is formed, are provided, wherein the dropout element (3, 4) is, as a device for adjusting the dropout, mounted on or in the fork arm end piece (21) so as to be axially displaceable, wherein at least one guide pin (28) arranged transversely to the fork arm end piece (21) is mounted on one of either the dropout element (3, 4) or the fork arm end piece (21) and at least one guide (26) for the guide pin (28) is provided on the other, respectively, of the dropout element (3, 4) or fork arm end piece (21) which has a directional component running axially relative to the fork arm end piece (21), **characterised in that** the guide pin (28) pin is mounted rotatably, and the guide (26) describes a spiral-formed section.

2. A front wheel fork according to claim 1, **characterised in that** the adjustment of the wheel axle can be continuous.

3. A front wheel fork according to claim 1 or 2, **characterised in that** the guide pin (28) is solidly connected with a jacket element (25), which at least partially encloses the fork arm end piece (21) and/or the dropout element (3, 4).

4. A front wheel fork according to claim 3, **characterised in that** the jacket element (25) is guided in a bearing bed (24) recessed in a housing wall of the dropout element (3, 4).

5. A front wheel fork according to claim 3 or 4, **characterised in that** the jacket element (25) can be locked in position by a snap-locking mechanism.

6. A front wheel fork for a multifunctional bicycle trailer according to claim 1, wherein the guide pin (28) is solidly connected with a jacket element (25), which at least partially encloses the fork arm end piece (21) and/or the dropout element, wherein the jacket element (25) is guided in a bearing bed (24) recessed in a housing wall of the dropout element (3, 4).

7. A front wheel fork arm according to claim 6, **characterised in that** the adjustment of the wheel axle can be continuous.

8. A front wheel fork arm according to claim 6 or 7, **characterised in that** the jacket element (25) can be locked in position by a snap-locking mechanism.

## Revendications

1. Fourche de roue avant pour une remorque de bicyclette multifonction comprenant deux bras de fourche (1, 2) au niveau des extrémités avant dans le sens du déplacement desquels est respectivement formé un détachement de fourche (3, 4) destiné à accueillir un axe de roue d'une roue (8), comprenant au moins un dispositif destiné à positionner l'axe de roue avec une composante directionnelle dans le sens du déplacement, une pièce d'extrémité de bras de fourche (21) disposée au niveau du côté avant d'un bras de fourche (1, 2) ainsi qu'un élément de détachement de fourche étant prévus, le détachement de fourche (3, 4) étant façonné dans ou sur l'élément de détachement de fourche, l'élément de détachement de fourche en tant que dispositif servant au positionnement du détachement de fourche étant monté coulissant axialement sur ou dans la pièce d'extrémité de bras de fourche (21), au moins une broche de guidage (28) disposée transversalement par rapport à la pièce d'extrémité de bras de fourche (21) étant montée sur l'un parmi l'élément de détachement de fourche ou la pièce d'extrémité de bras de fourche (21), et au moins un guide (26) pour la broche de guidage (28) se trouvant sur l'autre parmi l'élément de détachement de fourche ou la pièce d'extrémité de bras de fourche (21), lequel possède une composante directionnelle qui s'étend axialement par rapport à la pièce d'extrémité de bras de fourche (21), **caractérisée en ce que** la broche de guidage (28) est montée à rotation et le guide (26) décrit une portion hélicoïdale.

2. Fourche de roue avant selon la revendication 1, **caractérisée en ce que** le positionnement de l'axe de roue peut être effectué progressivement.

3. Fourche de roue avant selon la revendication 1 ou 2, **caractérisée en ce que** la broche de guidage (28) est reliée à demeure à une pièce d'enveloppe (25) qui entoure au moins partiellement la pièce d'extrémité de bras de fourche (21) et/ou l'élément de détachement de fourche (3, 4).

4. Fourche de roue avant selon la revendication 3, **caractérisée en ce que** la pièce d'enveloppe (25) est guidée dans un support de palier (24) encastré dans une paroi de boîtier de l'élément de détachement de fourche (3, 4).

5. Fourche de roue avant selon la revendication 3 ou 4, **caractérisée en ce que** la pièce d'enveloppe (25) peut être immobilisée par le biais d'un mécanisme d'encliquetage.

6. Fourche de roue avant pour une remorque de bicyclette multifonction selon la revendication 1, la broche de guidage (28) étant reliée à demeure à une pièce d'enveloppe (25) qui entoure au moins partiellement la pièce d'extrémité de bras de fourche (21) et/ou l'élément de détachement de fourche, la pièce d'enveloppe (25) étant guidée dans un support de palier (24) encastré dans une paroi de boîtier de l'élément de détachement de fourche (3, 4).

7. Fourche de roue avant selon la revendication 6, **caractérisée en ce que** le positionnement de l'axe de roue peut être effectué progressivement.

8. Fourche de roue avant selon la revendication 6 ou 7, **caractérisée en ce que** la pièce d'enveloppe (25) peut être immobilisée par le biais d'un mécanisme d'encliquetage.
